# EUROPEAN PATENT APPLICATION

(11) **EP 4 799 518 A1**
(43) Date of publication of application: **02.09.2026**
(21) Application number: 26161126.3
(22) Date of filing: 26.02.2026
(51) Int. Cl.: A43B 23/02, B29D 35/12, B33Y 80/00

(54) **METHOD AND SYSTEM FOR MANUFACTURING AN ARTICLE OF FOOTWEAR**

(30) Priority: 28.02.2025 CH 1872025; 28.02.2025 CH 1862025; 28.02.2025 CH 1922025; 15.10.2025 EP 25208972
(71) Applicant: On Clouds GmbH, 8005 Zürich (CH)
(72) Inventor: Keller, Lukas, 8005 Zurich (CH)
(74) Representative: Eichelhardt, Frank Robert

(57) **Abstract**

The invention relates to a method for manufacturing a footwear upper element (10). The method comprises a step (S10) of providing a shaping carrier (12); a step (S20) of applying a first thermoplastic layer (L1) onto a first specific area (A1) of the shaping carrier (12), thereby forming at least a part of the footwear upper element (10); and a step (S30) of applying a second thermoplastic layer (L2) onto a second specific area (A2) of the shaping carrier (12), thereby forming at least a part of a functional component (14), which, at least after having removed the first thermoplastic layer (L1) and the second thermoplastic layer (L2) from the shaping carrier (12), is moveable relative to the first thermoplastic layer (L1).

## Description

### Technical Field

The present invention relates to a method for manufacturing a footwear upper element and to a manufacturing system being configured to execute such a method. Furthermore, the present invention pertains to an article of footwear, in particular a sports and/or leisure shoe, manufactured by such a method and/or by such a manufacturing system.

### Background

Apparel manufacturing, including footwear, has continuously evolved to meet the demands of performance, comfort, and sustainability. The need for high-quality garments and shoes that offer durability, flexibility, breathability, and lightweight construction has driven innovation in production techniques. Traditional methods of manufacturing apparel and footwear involve knitting, weaving, or using cut-and-sew techniques, which can result in material waste and require extensive labor. Recent innovations have sought to improve efficiency, reduce waste, and enhance the performance characteristics of these products.

Emerging techniques enable the direct application of material onto a substrate, allowing for controlled deposition of functional layers. This approach facilitates the creation of lightweight, seamless, and high-performance apparel and footwear components with improved breathability and durability while minimizing material waste.

WO 2022/069583 A1 discloses a method for producing a textile material, in particular a shoe upper, by applying a molten thermoplastic filament onto a shoe last to form the textile material with a plurality of superimposed loops. Herein, the thermoplastic filament is ejected and/or sprayed from a spray head in a molten state as a helical strand and applied to the shoe last.

Existing methods for constructing apparel and footwear often involve multiple steps and separate material components, which can lead to inefficiencies in production, variability in product performance and require complex production lines. Advanced material application techniques address these challenges by streamlining the manufacturing process and offering greater design flexibility.

Despite these advancements, there remains a need for further refinement and optimization of these techniques. This involves improving the performance of the products while also increasing flexibility in production processes and product properties, allowing for more precise control over characteristics such as durability and usability.

This includes the ability to customize material composition, texture, breathability, elasticity, and structural support while also ensuring scalable and cost-effective production methods that meet the evolving demands of the industry, all while minimizing environmental impact and promoting sustainable practices throughout the production cycle.

### Summary

The invention concerns a method for manufacturing a footwear upper element. The method comprises a step of providing ta shaping carrier, and a step of applying a first thermoplastic layer onto a first specific area of the shaping carrier, thereby forming at least a part of the footwear upper element. Furthermore, the method comprises a step of applying a second thermoplastic layer onto a second specific area of the shaping carrier, thereby forming at least a part of a functional component, which, at least after having removed the first thermoplastic layer and the second thermoplastic layer from the shaping carrier, is moveable relative to the first thermoplastic layer.

The invention also concerns a manufacturing system for manufacturing a footwear upper element, the manufacturing system being configured for executing the method as disclosed herein.

In addition the invention pertains to an article of footwear, in particular a sports and/or leisure shoe, manufactured by the method and/or manufacturing system as disclosed herein.

Through this, a method and system for manufacturing a footwear upper element can be refined and/or optimized. The performance of the final products can be improved while increasing flexibility during production and with respect to product properties. Precise control over product characteristics such as flexibility, cushioning, durability, and/or usability can be achieved. A wide range of customizations can be made possible, in particular regarding material density, texture, elasticity, breathability, and structural support. Yet still, scalable, cost-effective, streamlined, and/or fully automated production methods can be enabled. At this point, it should be noted that the ordering of the steps, including those explained below, may vary. Accordingly, the ordering in which they are disclosed in the claims, in particular in claim 1, is not to be understood as limiting.

The footwear upper element can form part of a footwear upper, constitute the footwear upper itself, or represent a precursor of the footwear upper which may be subjected to further processing steps in order to obtain the finished footwear upper.

The footwear upper element may be understood as a structural part of the footwear upper, respectively a part of the article of footwear. The footwear upper element may at least partially be made from textile materials and/or designed to cover, enclose, and/or support a user's foot from at least the top, sides, front, and/or rear. The footwear upper element may play a central role within the overall footwear architecture by contributing to essential performance attributes such as fit, breathability, flexibility, and/or comfort. It may also influence the footwear's aesthetic and/or enable the integration of additional functionalities. The footwear upper element may serve as a protective and/or connective interface between a user's foot and a sole.

The footwear upper element may be a sheet element having a thickness, in particular a maximum thickness, being at least 10 times, preferably at least 50 times and most preferably at least 100 times, smaller than its width and/or length. The maximum thickness of the footwear upper element may be at least 0.1 mm, at least 0.2 mm, or at least 0.3 mm. The maximum thickness of the footwear upper element may be at most 5 mm, at most 4 mm, or at most 3 mm. The footwear upper element may have a non-uniform thickness, and may include at least one thickening, like, for example, a cushioning, a padding and/or a plating, and/or at least one thinning, like a flexible zone and/or a ventilation zone. Further details regarding the footwear upper element are provided below.

The shaping carrier may preferably be a three-dimensional moulded structure, in particular a footwear last, that defines an internal shape and/or fit of the footwear upper element. Technically, it may guide the construction of the footwear upper element, determining volume, contour, and/or alignment.

The term "specific area" should be understood herein as a defined and/or limited portion of the shaping carrier, distinguished by its dedicated purpose, function, shape and/or property.

The term "layer" should in this context be understood not in the narrow sense of a single sheet, but rather as a functional unit that may itself consist of several sub-layers placed on top of each other. A "layer" herein therefore denotes a coherent structural level, which provides a defined function, regardless of whether it is physically one or multiple stacked layers.

The functional component is a part of the footwear upper element. The functional component may be defined primarily by the role and/or function it performs rather than by its form alone. It contributes to the intended operation by fulfilling a specific task, enabling a process and/or providing a required property. Such a component is distinguished from purely structural or decorative features, as it directly supports the performance, efficiency and/or usability of the footwear upper element.

In some embodiments the step of applying the first thermoplastic layer may comprise applying a first thermoplastic filament at least partly as a plurality of first path segments, in particular of first loops, along a first application path.

Additionally or alternatively the step of applying the second thermoplastic layer may comprise applying a second thermoplastic filament at least partly as a plurality of second path segments, in particular of second loops, along a second application path.

This enables the provision of a footwear upper element with high flexibility, offering enhanced design freedom and advanced functional properties.

The following sections provide further explanations regarding the first thermoplastic filament. It should be noted that, although certain explanations may refer specifically to the first thermoplastic filament, they may likewise be applied, where considered advantageous by a skilled person, to other thermoplastic filaments mentioned herein. This applies in particular to the second thermoplastic filament, the second path segments, and the second application path. However, the same application technique may be used.

The at least one first thermoplastic filament and/or any further thermoplastic filament mentioned herein may be applied in a solid state onto the shaping carrier and/or onto an underlying layer of the first thermoplastic filament and/or any further thermoplastic filament, and may be heated afterwards, for example by hot air blowing, heat irradiation, or any other applicable method, for fusing the at least one first thermoplastic filament and/or any further thermoplastic filament with each other and/or with themselves.

Alternatively, and preferably, the first thermoplastic filament and/or any further thermoplastic filament may be applied in an at least partially molten and/or liquid state onto the shaping carrier and/or onto an underlying layer of the first thermoplastic filament and/or any further thermoplastic filament, the first thermoplastic filament and/or any further thermoplastic filament being hereby fused with each other and/or with themselves upon hardening. Before or while applying the first thermoplastic filament and/or any other thermoplastic filament, the shaping carrier and/or the respective thermoplastic filament may be heated, in particular via a heating element integrated into the shaping carrier and/or via an external heating unit, for example a hot air blower, an IR-irradiation unit, a laser, or any other applicable heating unit.

The first thermoplastic filament and/or any other thermoplastic filament may be provided as strands, in particular continuous strands, preferably having a circular cross-section. During application and before fusing, the first thermoplastic filament and/or any other thermoplastic filament may have a maximum thickness of 10 µm to 1000 µm, of 50 µm to 500 µm, of 50 µm to 300 µm, or of 75 µm to 250 µm. Herein, the "maximum thickness" may be the maximum cross-sectional extension of the respective thermoplastic filament. If the respective thermoplastic filament has a circular cross-section, the maximum thickness is equal to the diameter of the respective thermoplastic filament.

In some embodiments the first thermoplastic filament may at least partly be formed and/or applied as a plurality of, preferably partially superimposed, path segments, in particular loops, along a first application path. Thus, thermoplastic material may be provided in a specific area in a controlled and/or ordered manner. In particular the thermoplastic materials can be provided at relatively high density for additional effects like strengthening, plating, etc.

The path segments, in particular the loops may advantageously be at least partially overlapping with each other and/or with themselves and may at least partially be located on top of each other. The path segment may be embodied as recurring patterns, in particular recurring loops, of the first thermoplastic filament. By at least partially overlapping and fusing neighbouring filament lines, the footwear upper element may be shaped.

According to some embodiments the footwear upper element and/or the functional component may be a laid textile sheet element. Herein, the respective path segments, in particular the loops, may not be inter-looped, entangled and/or chain linked with each other. The path segments, in particular the loops are arranged partially on top of each other, i.e. stacked on each other, in particular along the first application path.

The partially superimposed path segments, in particular loops, may be arranged along the first application path one after another. At least some, or the majority, i.e. more than 50 %, or essentially all, of the superimposed segments, in particular loops, except the last path segment along the first application path may be partially arranged underneath their next adjacently arranged segment, in particular loop. In other words, the superimposed path segments, in particular loops, may form a structure in which the path segments, in particular loops, partially overlap and in which starting from the first path segment, in particular loop, every path segment, in particular loop, except the last one is arranged partially underneath its next adjacent path segment, in particular loop.

Each partially superimposed path segment, in particular loop, except the last one, may be arranged along the filament path underneath their at least 2, at least 5, at least 10, or at least 15, next adjacently arranged path segments, in particular loops.

The first thermoplastic filament may be part of a common continuous thermoplastic filament. In certain embodiments, the continuous thermoplastic filament may form at least 100, in particular at least 1000, in particular at least 5000 path segments, in particular loops. The entire connecting section may be formed of a single thermoplastic filament.

In some embodiments, the
first thermoplastic filament may have a length of at least 0.1 m, at least 1 m, at least 100 m, or at least 1000 m, or at least 1500 m. The thermoplastic filament may have a filament length of at most 10000 m, at most 5000 m, or at most 2500 m.

The loops may have any desired shape. For example, the loops may be round and particularly circular or oval, such as elliptic, or they can be polygonal. Preferably they are round. Partially superimposed loops are loops which are partially arranged on top of each other and thus partially overlap. However, the loops are not completely aligned with each other but offset to each other. In other words, the loops partially overlap with each other.

The first thermoplastic filament may form a plurality of crossings along the first application path. At the crossings, the first thermoplastic filament may contact itself, and may form a material-bonded, in particular fused, connection, in particular devoid of any additional, i.e. external adhesive.

In some embodiments, the footwear upper element and/or the functional component may have a filament crossing density of at least 100 crossings per cm², at least 200 crossings per cm², at least 300 crossing per cm², at least 400 crossings per cm², at least 500 crossings per cm², at least 600 crossings per cm², or at least 700 crossings per cm². The footwear upper element and/or the functional component may have a filament crossing density of less than 10000 crossings per cm², less than 5000 crossings per cm², or less than 3000 crossings per cm². Herein, the number of crossings may be derived from a microscopic image of the connecting section.

If the path segments are embodied as loops. Each loop except the first and last ones along the first application path, may have a crossing number of at least 10, at least 20, at least 30, at least 50, at least 100, or at least 200. Herein, the "crossing number" is the number of crossings formed at different positions when staring at any crossing of the corresponding loop and counting the number of crossings formed by this loop with other loops until one comes back to the crossing of this loop at which one has started.

A higher crossing density can provide an increased stability, in particular tearing strength, as any occurring forces are well distributed over many crossings. Furthermore, forces can be efficiently transmitted through the footwear upper element and/or the functional component.

At the crossings, an upper filament section of the first thermoplastic filament and/or any further thermoplastic filament, which has been applied later, may at least partly be sunken into an underlying lower filament section of the thermoplastic filament, which has been applied earlier.

The footwear upper element and/or functional component may have a path segment density, in particular a loop density, of 0.5 to 15 path segments, in particular loops, per cm², 0.7 to 10 path segments, in particular loops, per cm², or 0.7 to 5 path segments, in particular loops, per cm². As used herein, the "path segment density", respectively the "loop density", may be the number of path segments, in particular of loops, being formed by the respective thermoplastic filament per cm². Herein, the respective path segment density, in particular the respective loop density, may be derived from a microscopic image of the connecting section.

In case the path segments are loops, each loop formed by the at least one first thermoplastic filament may define a maximum clear distance of 5 mm to 50 mm, of 5 mm to 40 mm, or of 5 mm to 30 mm. Herein, the "maximum clear distance" may be the maximum length of a straight line extending through the center of the loop through the open area defined by the inner periphery of the at least one first thermoplastic filament forming the loop. If the loop is circular, for example, the maximum clearing distance is equal to the inner diameter of the loop.

A higher maximum clear distance can provide lower weight, higher flexibility, and/or increased breathability.

The first thermoplastic filament may be provided as strands from an extruder and/or a spray head. The first thermoplastic filament may be formed of a plurality of path segments, in particular loops, along the first application path. The plurality of path segments, in particular loops, may be formed by a relative movement and/or tilting of the extruder and/or spray head with respect to the shaping carrier. The extruder and/or spray head may be fixed and the shaping carrier may be robotically moved in order to form the plurality of path segments, in particular loops. However, the opposite arrangement and motion would also be conceivable.

The spray head may comprise a plurality of gas discharge nozzles for discharging a gas, in particular air, laterally from at least one filament discharge nozzle of the spray head for discharging the first thermoplastic filament. The gas discharge nozzles may be, advantageously evenly, arranged around the at least one filament discharge nozzle and may be angled with respect to a discharge direction of the at least one filament discharge nozzle, in particular in order to form the ejected first thermoplastic filament into a helix with increasing diameter as the distance from the spray head increases. In this case the first application path is scanned by a relative movement of the spray head with respect to the shaping carrier, whereas the path segments, in particular the loops may be formed by the helical discharge of the first thermoplastic filament from the at least one filament discharge nozzle. Herein, the spray head may be fixed and the shaping carrier, may be robotically moved in order to drive along the first application path. A spray head having gas discharges nozzles and a deposition method as disclosed herein are also described in WO 2022/069583 A1. Here again, the opposite arrangement and motion of spray head and shaping carrier would be conceivable, too.

In some embodiments, the molten first thermoplastic filament may be ejected from the filament discharge nozzle with a velocity of at least 0.1 m/s, at least 0.5 m/s, or at least 0.7 m/s. The molten first thermoplastic filament may be ejected from the filament discharge nozzle with a velocity of at most 10 m/s, at most 5 m/s, or at most 1 m/s.

The first thermoplastic filament may be provided with changing, in particular gradual or abrupt changing, colour along its length. Changing the colour of the first thermoplastic filament may be achieved by changing a colour of a material composition and/or a colouring agent in the extruder and/or the spray head, while applying the first thermoplastic filament. Alternatively or additionally, the colour of the first thermoplastic filament may be changed by using at least two separate extruders, each containing a material composition of different colour, and switching between the extruders for providing one of the material compositions to a common spray head. Further still, two spray heads may be used, each supplied by its own extruder containing a material composition of specific colour.

The first thermoplastic filament may include any suitable thermoplastic polymer material and/or composition, for example polyester, polyamide, polyether block amide (PEBA), for example PEBAX^{®} (Arkema), thermoplastic polyurethane (TPU), ethylene vinyl acetate (EVA), polyolefin, such as polyethylene or polypropylene, or mixtures thereof.

In addition, the first thermoplastic filament may contain one or more additives, like pigments, foaming agents, cross-linking agents, etc.

It is again to be noted that the foregoing explanations with regard to the first thermoplastic filament, the first path segments and/or the first application path can be applied to any other thermoplastic filament, in particular the second thermoplastic filament, path segments and/or application path where it appears useful for the skilled person.

According to some embodiments the method may further comprise a step of providing the shaping carrier with an intermediate blocking layer. The intermediate blocking layer may form at least a part of the second specific area.

In this way, the second layer can be created which, at least in a defined specific area during application and optionally a subsequent treatment process, does not come into contact with the first layer.

An intermediate blocking layer should be understood herein as a tool defining a desired shape and/or geometry of the functional component. It may be set up in advance to the step of applying the second thermoplastic filament onto it. Thereby it may at least temporarily cover and/or spatially separate the first specific area, respectively the first thermoplastic layer, at least partially from the second specific area, respectively the second thermoplastic layer.

The intermediate blocking layer may at least temporarily form part of the shaping carrier. However, this does not necessarily require direct contact or a uniform monolithic structure of the shaping carrier and the intermediate blocking layer.

In some embodiments the method may further comprise a step of removing the intermediate blocking layer after the first thermoplastic layer and/or the second thermoplastic layer have/has hardened.

Since the two layers, once cured, no longer bond with one another, at least not permanently, this allows for the creation of complex extensions, multi-layered structures and/or in particular functional components being at least partially movable relative to the first thermoplastic layer without compromising the integrity of the footwear upper element.

The intermediate blocking layer may be equipped with a non-stick coating and/or may be made of materials that do not stick to the first thermoplastic filament and/or the second thermoplastic filament, thereby allowing the applied second thermoplastic layer to be released without residue easily from the intermediate blocking layer.

Once removed the second thermoplastic layer may retain the structure and external form given by the intermediate blocking area.

The intermediate blocking layer can be reusable, which contributes in particular to the sustainability of the method.

According to some embodiments the method functional component may comprise at least one tongue, strap, flap, loop, pull tab and/or pocket.

Through this, advantageous properties are achieved, such as facilitating easy entry of the wearer's foot into the footwear and/or ensuring secure and adjustable fastening.

In some embodiments the shaping carrier may comprise a footwear last, wherein at least one geometry parameter of the footwear last deviates from a targeted form of the footwear upper element, in particular in at least one section of the second specific area. In other words the footwear last may have indentations and/or curvatures extending from a surface of the footwear last.

Thereby, components, in particular functional components, such as a tongue, a strap, a flap, a loop and/or a pocket can initially be manufactured in an oversized or over-formed state, which allows for subsequent adjustment, controlled deformation and/or clearance creation. This approach enables the generation of functional play or flexibility. As a result, this method enhances overall design freedom.

According to some embodiments the second specific area may be at least partially located at an instep section of the footwear last. The instep section may preferably have a curvature or may indent from the surface of the footwear last. By placing an intermediate blocking layer over such indentation for example
This makes it possible to create a shoe tongue and/or fastening strap by applying the second thermoplastic filament onto such a specific area.

In some embodiments the first specific area and the second specific area may at least partially overlap. Especially in peripheral regions, the first specific area and the second specific area may overlap.

This provides additional stability and/or controlled bonding between the first and second specific areas, while still allowing the main sections to remain separate. In this way, precise structural design and/or functional differentiation within the overall footwear upper element are achieved.

According to some embodiments the first specific area and the second specific area may be adjacent to each other on the same level with respect to an outer surface of the shaping carrier. In other words in some embodiments the first specific area and the second specific area may not overlap at all.

Thereby unintended interactions between the specific areas, respectively the thermoplastic filaments applied therein is prevented and/or each area maintains its own distinct function and/or structural properties.

In some embodiments the first thermoplastic filament and the second thermoplastic filament may be both parts of a common thermoplastic filament. This may imply that both the first thermoplastic filament and the second thermoplastic filament may be made from the same material but provided as separate, individually controllable filaments during processing, which can advantageously simplify the method for manufacturing. Moreover, storage requirements can be decreased as less material has to be stocked.

Optionally the first thermoplastic filament and the second thermoplastic filament can be parts of a common continuous thermoplastic filament. Hereby, a fast, reliable, transparent and/or traceable application of the thermoplastic filament and the second thermoplastic filament can be ensured.

In Another variant the first thermoplastic filament may differ from the second thermoplastic filament. In other words, different materials and/or separate filaments may be used for each of the first thermoplastic filament and the second thermoplastic filament.

Thus, design freedom can be increased and/or more complex designs can be enabled, allowing for material-specific performance tuning. This flexibility in filament arrangement and material selection allows for a high degree of customization in terms of functional integration, mechanical performance, manufacturing efficiency and also design.

During application of the first thermoplastic filament and/or of the second thermoplastic filament at least one respective application path parameter may be varied. The term "application path parameter" as used herein may be understood as a parameter relating to the respective application path. The at least one application path parameter may be indicative of the relative movement of the extruder and/or spray head in relation to the footwear last.

The at least one application path parameter may comprise an application speed of applying the at least one first thermoplastic filament and/or the at least one second thermoplastic filament. This allows easy control and/or setting of a density and/or flexibility and/or breathability of the article of footwear.

The application speed may be defined by the relative speed of the extruder and/or spray head with respect to the shaping carrier, and/or with respect to the first thermoplastic filament and/or the second thermoplastic filament. A higher application speed may yield a less dense and/or more flexible and/or more breathable region of the footwear upper element. A lower application speed may lead to a denser and/or stiffer and/or less breathable region of the article of footwear upper element.

Furthermore, the at least one application path parameter may comprise a course of the first application path and/or the second application path. This greatly increases flexibility when manufacturing articles of footwear and/or parts thereof. Furthermore, this allows creating specific and/or complex shapes, in particular for providing certain attributes in the specific areas.

The first application path and/or the second application path may change its course within the respective specific area by at least at least 20°, at least 40°, at least 60°, at least 80°, at least 100°, at least 120°, or at least 140°. The first application path and/or the second application path may be partially meandering in the respective specific area. Furthermore, the first application path and/or the second application path may be partially spiral shaped in the respective specific area.

It should be understood that although the wording "applying a thermoplastic filament" and/or "applying a second thermoplastic filament" is used, this should not be construed as meaning that only one single layer of the respective thermoplastic filament is allowed on top of the respective underlying structure. In fact, several layers of the respective, thermoplastic filament may be applied.

If the respective thermoplastic filament is applied with a maximum layer thickness of at most 0.5 mm, at most 0.25 mm, or at most 0.1 mm, material savings and a weight reduction can be achieved. Furthermore, an article of footwear with advantageously high flexibility can be provided for enhanced design freedom.

In other use cases the respective thermoplastic filament may be applied in the at least one specific area with a minimum layer thickness of at least 0.5 mm, at least 0.75 mm, at least 1 mm, or at least 2 mm. This can ensure an adequately high effect on the at least one specific property in the at least one specific area. Furthermore, differences in mechanical and/or thermal properties in different sections of the article of footwear can be increased. Thus, diversification can be enhanced.

In some embodiments sections, in particular straight sections, may be angled with respect to underlying sections, in particular straight sections, of the respective application path in the at least one specific area.

Furthermore, application paths, in particular in terms of applied shapes, of the first thermoplastic filament and the second thermoplastic filament may differ. For example, even within the first and/or the second application path, the respective thermoplastic filament may be oriented differently. This allows advantageously adjusting and/or setting mechanical and/or thermal properties of the article of footwear in the at least one specific area. Furthermore, design freedom can be increased as specific aesthetic effects can be created.

According to some embodiments the method may further comprise a step of providing at least one fastening element and a step of positioning the at least one fastening element on a first fastening portion of the first thermoplastic layer or on a second fastening portion of the second thermoplastic layer.

The term "fastening element" shall herein be understood as any component and/or mechanism configured to join, secure and/or hold together the first thermoplastic layer and the second thermoplastic layer, in a manner that allows repeated opening and closing without causing damage to the connected parts. The fastening element may further be configured to facilitate donning, adjustment, tightening and/or removal of the footwear element, respectively the article of footwear by a user.

Through this a reliable and/or releasable connection between the two thermoplastic layers, especially between the first thermoplastic layer and the fastening functional is provided. This allows parts of the footwear upper element to be opened or closed quickly, accurately and/or repeatedly, thereby improving both handling, wear comfort and/or the overall durability of the footwear upper.

In some embodiments the method may further comprise a step of providing at least one corresponding and/or complementary fastening element on the first thermoplastic layer or on the second thermoplastic layer being opposite to the at least one fastening element.

Thereby, a secure and/or reusable connection between the first thermoplastic layer and the second thermoplastic layer, respectively between the first thermoplastic layer and the functional component, is enabled. Such a configuration may further make it quick and easy to put on an article of footwear comprising such a footwear upper element.

According to some embodiments the at least one fastening element and/or the at least one corresponding fastening element comprises a magnet, a hook and/or Velcro^{®} and or any other fastening element that appears advantageous to the skilled person. The fastening element may be secured on the respective thermoplastic layer via a thermoplastic filaments. Preferably the fastening element is embedded within the respective thermoplastic layers, thereby ensuring a smooth and/or flexible surface, improving durability by eliminating weak attachment points, and/or enabling easy, precise, and/or long-lasting use.

Preferably, the article of footwear comprising one of the footwear upper elements described above forms, for example, a sports shoe, in particular a running shoe, a marathon shoe, a tennis shoe, a soccer shoe, a football shoe, an athletics shoe, and/or a climbing shoe, a hiking shoe, a skating shoe, a dancing shoe, a leisure shoe, a sneaker, and so on.

The article of footwear may further comprise a midsole. The midsole may refer to an intermediary layer of the article of footwear. The midsole may be configured to be positioned between an outsole and the footwear upper element. The midsole may play a crucial role in cushioning and energy return. The midsole may function as a dynamic interface that balances mechanical loads, directly influencing comfort, responsiveness, and/or biomechanical efficiency. Its material properties, structural design, and density can have an impact on the overall performance.

The midsole may be made from any suitable material, in particular a thermoplastic polymer, like, for example polyester, polyamide, polyether block amide (PEBA), for example PEBAX^{®} (Arkema), thermoplastic polyurethane (TPU), ethylene vinyl acetate (EVA), polyolefin, such as polyethylene or polypropylene, or mixtures thereof. The outsole may be made from any suitable material, for example natural or synthetic rubber, or from a thermoplastic polymer, like, for example, a thermoplastic polyurethane (TPU). The midsole and/or the outsole may be moulded, 3D-printed, or manufactured using any other applicable method. The midsole may, in particular additionally, be foamed.

One preferred material combination may be PEBAX^{®} (Arkema) for the midsole and thermoplastic polyurethane (TPU), such as Desmopan^{®} 2790A or Desmopan^{®} 9392A (Covestro), for the at least one first thermoplastic filament. A synthetic rubber may be preferred for the outsole.

When manufacturing the midsole, softened PEBAX^{®} (Arkema) may be injection-moulded and foamed. Alternatively, PEBAX^{®} (Arkema) may be 3D-printed and possibly then foamed to form the midsole. The midsole may afterwards be attached to the footwear last. The rubber outsole may be attached to the midsole by glueing or any other applicable method, in particular before or after attaching the midsole to the shaping carrier.

The term "arranging the upper side of the midsole at a shaping carrier" may refer to the direct and/or indirect positioning and possibly fixing of the midsole's top surface onto the shaping carrier, for instance by way of an intermediate layer such as a portion of the footwear upper element. During and/or after this arranging step, the upper side of the midsole may face and/or at least partially contact the shaping carrier. Preferably, the upper side of the midsole is arranged at least partially in a sole region of the shaping carrier. Technically, this step may facilitate accurate positioning and alignment of components and may help establish a stable interface that reduces the risk of displacement during subsequent manufacturing steps.

In some embodiments the step of arranging the upper side of the midsole at the shaping carrier may comprise 3D printing of at least a portion of the midsole onto a lower side of the shaping carrier and subsequent in-situ foaming of the midsole. In other words, at least a portion of the midsole may be formed and/or deposited onto the lower side of the shaping carrier using additive manufacturing techniques.

In other words at least a portion of the midsole can be formed and/or applied onto the lower side of the shaping carrier by 3D printing. Alternatively, at least a portion of the midsole may be 3D printed onto the thermoplastic filament forming the footwear upper element, which is pre-applied to the lower side of the footwear last. This enables improved adhesion between the midsole and the last, allows for greater design flexibility, and/or supports efficient customization in the manufacturing process.

Additionally, a gel compound may be injected into the midsole, either during or after the 3D printing process, to further enhance cushioning, energy return, and/or overall comfort. The type and placement of the gel can be tailored to specific performance requirements or individual user needs, enabling a high degree of functional customization.

The manufacturing system, which is configured to preferably automatically execute the method disclosed herein, may comprise a set of manufacturing units for manufacturing the article of footwear. The set of manufacturing units may comprise a control unit for controlling the execution of the method by controlling other manufacturing units of the set of manufacturing units. The control unit may, for example, comprise a processing unit and a memory unit containing computer-readable instructions that may be read and executed by the processing unit in order to implement the method.

The set of manufacturing unit may further comprise at least one or all of the following manufacturing units: the spray head, the extruder, a gas supply unit, in particular an air supply unit for supplying gas, in particular air, to the gas discharge nozzles, a polymer supply unit for supplying a polymer composition to the extruder and/or to the filament discharge nozzle, a heating unit to heat the shaping carrier and/or the respective thermoplastic filament and/or the midsole, and/or a robotic handler for manipulating a relative position and/or orientation of the spray head and/or the heating unit with respect to the shaping carrier.

The set of manufacturing units may further comprise at least one or all of the following manufacturing units: a print head for applying at least one print onto the respective thermoplastic filament and/or the midsole, a plasma unit for plasma treating the respective thermoplastic filament and/or the midsole, in particular prior to printing, a curing unit for curing the respective thermoplastic filament and/or midsole unit and/or the at least one print, a further robotic handler for manipulating a relative position and/or orientation of the print head and/or the plasma unit and/or the curing unit with respect to the shaping carrier and/or the footwear upper element, a de-shaping unit for removing the respective thermoplastic filament from the footwear last, in particular a de-lasting unit for removing the footwear upper element and the midsole from the shaping carrier, and/or a packing unit for packaging the article of footwear in a sales and/or transport packaging.

Furthermore, the manufacturing system may comprise an enclosure housing at least some, preferably the majority and possibly all manufacturing units of the set of manufacturing units. The enclosure may house all manufacturing units of the set of manufacturing units apart from the de-shaping unit and/or packing unit. The enclosure can provide protection during manufacturing, not only for personnel, but for the process itself.

The manufacturing system may comprise a single manufacturing station having the set of manufacturing units, or may comprise a plurality of identical manufacturing stations, each having its own set of manufacturing units and possibly each having a dedicated enclosure, which allows easy scalability of production capacities by adding or removing manufacturing stations.

Additionally, the footwear last or a plurality of footwear lasts, in particular different shaping carriers for different apparel sizes and/or shapes, may be part of the manufacturing system as well.

The methods, elements and articles disclosed herein are not intended to be limited to the application and embodiment described above. In particular, they may have a number of individual elements, components and units as well as process steps deviating from a number specified herein in order to fulfil a mode of operation described herein. In addition, in the case of value ranges specified in this disclosure, values lying within the specified limits are also to be regarded as disclosed.

In particular, it is pointed out that all features, properties and methods described in relation to an element, or an article are transferable mutatis mutandis to methods and can be used in the sense of the invention and are deemed to be co-disclosed. The same applies in the opposite direction. This means that structural features mentioned in relation to methods can also be considered and claimed within the scope of device claims and can also be counted as part of the disclosure.

In the following, the present invention is described by way of example with reference to the accompanying figures. The drawing, the description and the claims contain numerous features in combination. The skilled person will also usefully consider the features individually and use them sensibly in combination in the context of the claims.

If there is more than one example of a particular object, only one of them may be provided with a reference sign in the figures and in the description. The description of this specimen can be transferred accordingly to the other specimens of the object. If objects are named in particular by means of numerical words, such as first, second, third object, etc., these are used to name and/or assign objects. Accordingly, for example, a first object and a third object, but no second object, can be included. However, a number and/or sequence of objects could also be derived from numerical words.

### Brief description of the drawings

Embodiments of the present disclosure will now be described by way of example only and with reference to the following accompanying drawings.
Figure 1 shows a three-dimensional schematic of a step of arranging a midsole on a shaping carrier according to a first embodiment.
Figure 2 shows a three-dimensional schematic of a step of applying a first thermoplastic layer onto the shaping carrier according to figure 1.
Figure 3 comprises an enlarged view of a detail X of the first thermoplastic layer of figure 2.
Figure 4 depicts a three-dimensional schematic of a step of providing a shaping carrier according to a second embodiment with an intermediate blocking layer.
Figure 5 shows a three-dimensional schematic of the shaping carrier according to figure 4 with the intermediate blocking layer provided.
Figure 6 shows a three-dimensional schematic of a step of applying a second thermoplastic filament onto the intermediate blocking layer according to figure 5.
Figure 7 shows a three-dimensional schematic of a step of removing the intermediate blocking layer according to figure 6.
Figure 8 shows a two-dimensional schematic of a shaping carrier according to a third embodiment.
Figure 9 shows a two-dimensional schematic of a step of applying a footwear upper element onto the shaping carrier according to figure 8.
Figure 10 shows an article of footwear manufactured by the step shown in figure 9.
Figure 11 shows a two-dimensional schematic of the article of footwear according to figure 10.
Figure 12 shows a two-dimensional schematic of a step of applying a second thermoplastic element onto a shaping carrier according to a fourth embodiment.
Figure 13 shows a schematic flow diagram of a method for manufacturing different articles of footwear.
Figure 14 contains a schematic view of a part of a manufacturing system for manufacturing the articles of footwear.

### Detailed Description

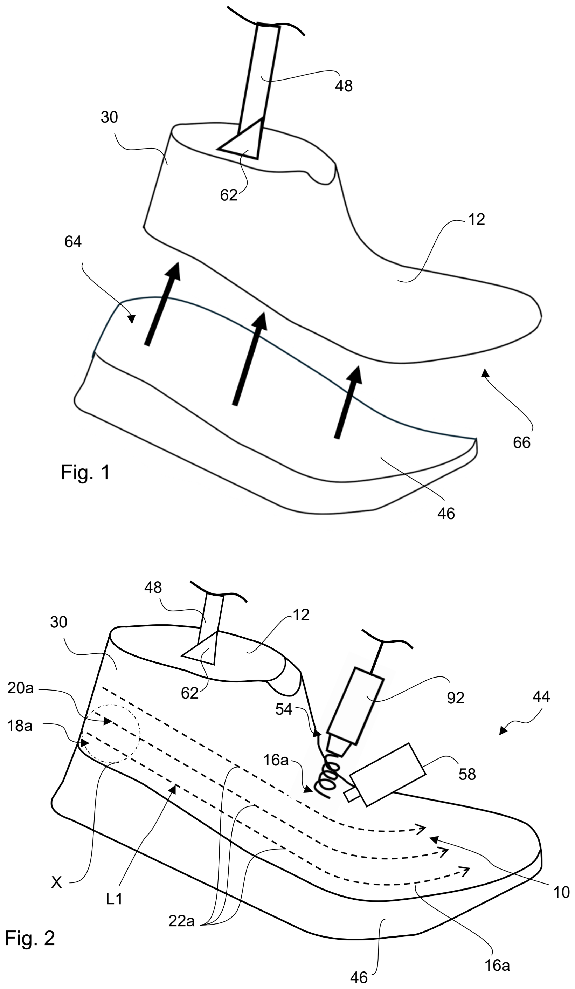

Figure 1 schematically illustrates a step S10 in which a shaping carrier 12 according to a first embodiment, herein configured as a common footwear last 30, is provided. Furthermore, it is shown that a midsole 46 is arranged onto the footwear last 30. This step may be one of the initial steps in the process of manufacturing a footwear article. However, it should be noted, that arranging the midsole on the shaping carrier can also be carried out in a later stage of the process. The midsole 46 comprises an upper side 64 that preferably has a complementary shape, allowing it to fit onto the lower side 66 of the footwear last 30. Ideally, the midsole 46 includes a complementary recess or the like so that the midsole 46 can engage with the footwear last 30 in a form-fitting manner, thereby preventing the midsole 46 from immediately falling off the footwear last 30. The midsole 46 may be made from any suitable material, in particular a thermoplastic polymer, like, for example polyester, polyamide, polyether block amide (PEBA), for example PEBAX^{®} (Arkema), thermoplastic polyurethane (TPU), ethylene vinyl acetate (EVA), polyolefin, such as polyethylene or polypropylene, or mixtures thereof. Alternatively to a pre-fabricated midsole 46, the midsole 46 may be moulded, 3D-printed, or manufactured using any other applicable method. The midsole 46 may, in particular additionally, be foamed in-situ.

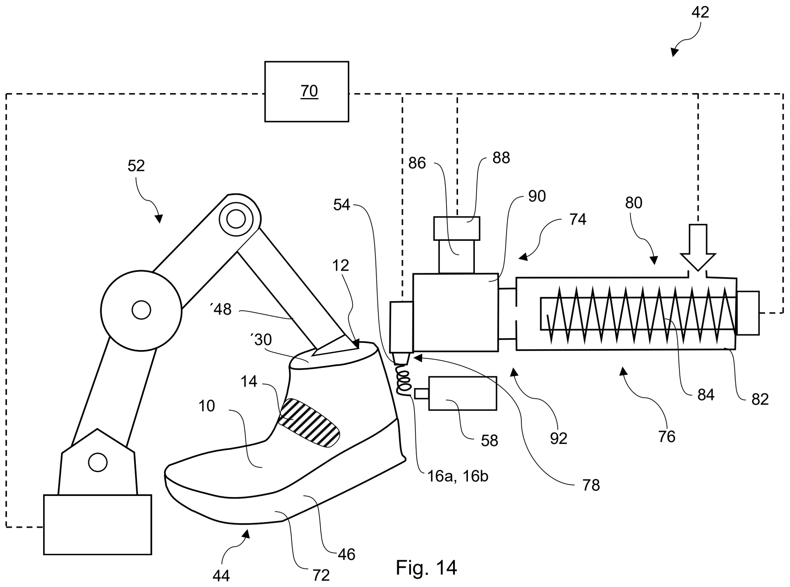

Figure 2 schematically shows a step S20 which may be carried out in the process of manufacturing a footwear article subsequently to the step S10 illustrated in figure 1. In figure 2 the upper side of the midsole 64 is in contact with the lower side 66 of the footwear last 30. To ensure that the midsole 46 remains securely connected to the footwear last 30 even when exposed to stronger forces, such as centrifugal forces that may occur due to movement by a robot arm 48 to which the footwear last 30 is coupled in a motion-transmitting manner via an interface 62, when a first thermoplastic layer L1 is applied forming at least a part of a footwear upper element . The thermoplastic layer L1 comprises a first thermoplastic filament 16a which can be provided by a textile output unit 92. Further details regarding the provision of the first thermoplastic filament 16a are explained below in connection with Fig. 14.

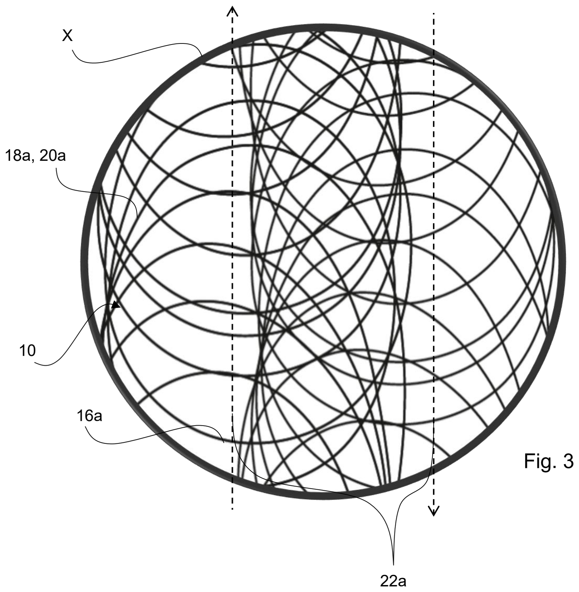

As can be seen in figure 3, which shows the detail X of figure 2, the first thermoplastic layer L1 is created by applying a first thermoplastic filament 16a onto the footwear last 30 to form a plurality of path segments 18a in the form of loops 20a along an application path 22a. With reference to figure 14, the application path 28b may be scanned by a handling unit 52, which moves the footwear last 30 relative to a stationary filament discharge nozzle 54 of the output unit 92. Since the first thermoplastic filament 16a is ejected and/or sprayed in helical form, the plurality of loops 20a is formed along the application path 22a as depicted in figure 3, which shows two parallel sections of the application path 22a and how they and the loops 20a overlap. Thus, the loops 20a are laid partially on top of each other, wherein at crossings of the loops 20a the loops 20a are fused to each other, thereby creating the first thermoplastic layer L1 on the footwear last 30.

With reference to figure 3, where as an example only two sections of the application path 22a are shown, the application path 22a may circumvent the footwear last 30 at least partially in a multitude of sections, thereby forming the footwear upper element 10. Thus, the application path 22a may form a kind of helix around the footwear last 30.

The at first thermoplastic filament 16a is applied onto the footwear last 30 to form a uniform layer thickness of 0.5 mm or less. This saves material and weight.

When applying the first thermoplastic filament 16a at least one application path parameter can be varied during application of the first thermoplastic filament 16a onto the footwear last 30 for creating at least one specific property in at least one specific area.

The at least one application path parameter may be an application speed of applying the first thermoplastic filament 16a onto the footwear last 30 along the application path 22a.

It is to be noted that the foregoing descriptions relating to the application of the first thermoplastic filament 16a forming at least a part of the footwear upper element 10 are likewise applicable to any other thermoplastic filament processed in any of the herein disclosed methods and/or articles of footwear if it seems reasonable to the skilled person. This applies in particular to the second thermoplastic filament 16b described introduced and described further below.

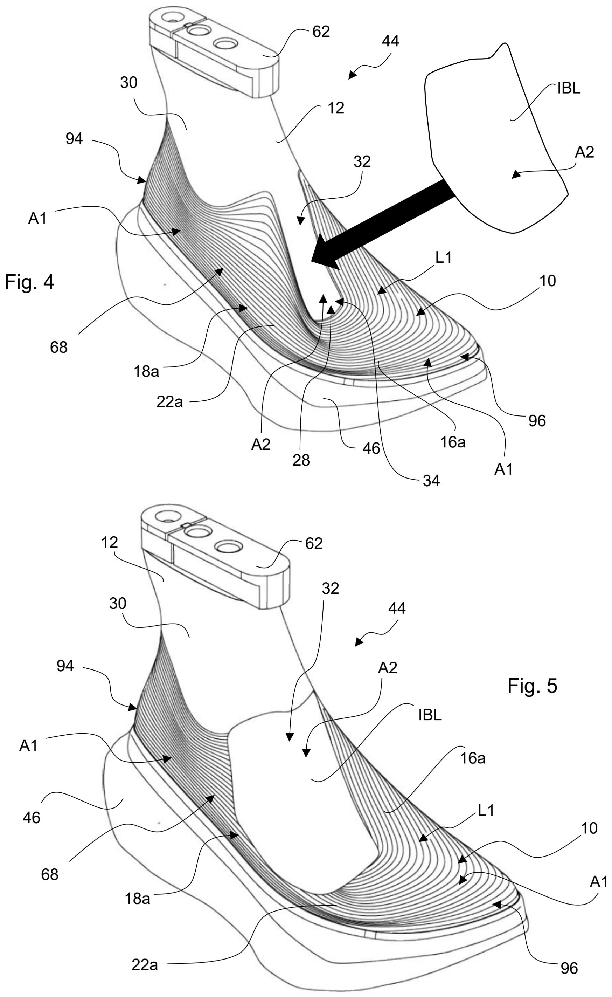

Figure 4 depicts a three-dimensional schematic of a step S40 of providing a shaping carrier, configured as a footwear last, according to a second embodiment with an intermediate blocking layer IBL. The difference between the shaping carrier 12 shown in figure 4 and the shaping carrier shown in figures 1 and 2 is that the shape, respectively the geometry of the shaping carrier 12 deviates from the intended shape of the footwear upper element 10, particularly in at least one section of a second specific area A2. Herein the second specific area A2 extends mainly along a portion of the shaping carrier 12 representing a back portion, respectively an instep section 32 of a foot. In the shown embodiment this specific area A2 comprises an indentation exceeding from the surface of the shaping carrier 12 and thereby creating a negative mould 34.

The area outside the second specific area A2 forms the first specific area A1, similar to the one shown in Figure 2, extending from a heel portion 94 via lateral portions 68 to a toe portion 96 of the shaping carrier. The first specific area A1 is covered with a first thermoplastic filament 16a forming a first thermoplastic layer L1 of a footwear upper element 10. Moreover, the intermediate blocking layer IBL shown herein is configured as a piece that is complementary or configured in such a way that, when arranged on the shaping carrier 12, it restores the targeted form of the footwear upper element 10 or at least partially covers the negative mould 34. The installation procedure for the intermediate blocking layer IBL is indicated by the arrow.

The intermediate blocking layer IBL is reversibly coupled to the shaping carrier 12, thereby forming part of the shaping carrier 12. For example, magnets and/or a snap fit mechanism may be provided enabling a secure connection between the intermediate blocking layer IBL and the footwear last 12.

As soon as the intermediate blocking layer IBL is provided onto the shaping carrier 12, respectively onto the second specific area A2 of the shaping carrier 12, this second specific area A2 is also transferred onto an outward facing side of the intermediate blocking layer IBL. This means that the intermediate blocking layer IBL, through direct or indirect contact the shaping carrier 12, may adopt the same boundary defined by the underlying shaping carrier 12.

As can be seen in figure 5 the intermediate blocking layer may not only cover the negative mould 34, respectively its indentation but also a part of the adjacent first specific area A1, respectively the first thermoplastic layer L1 of the footwear upper element 10 which has been applied in a step S20 before the intermediate blocking layer IBL has been provided.

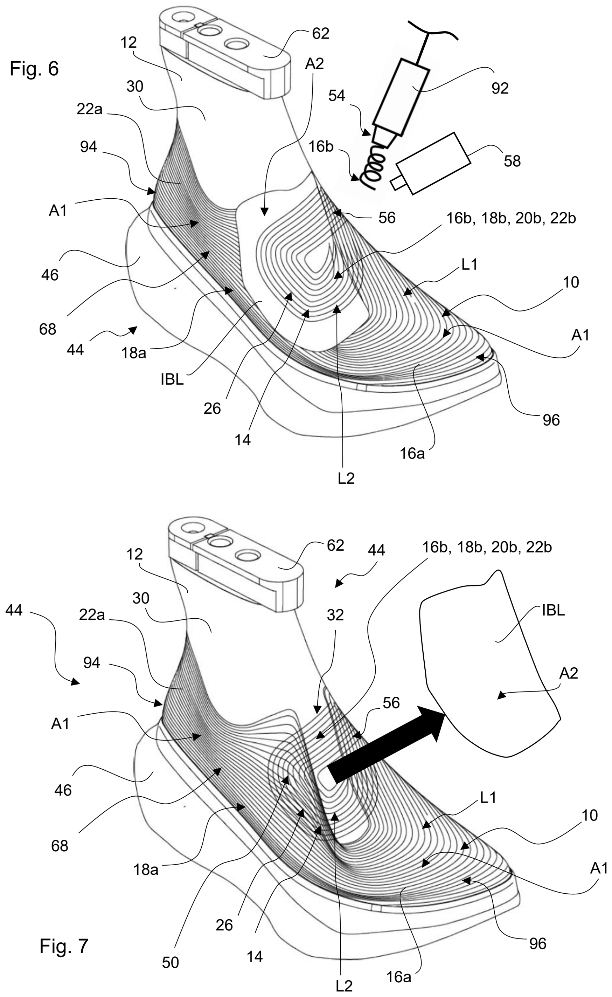

After the intermediate blocking member IBL has been provided a step S30 can be executed as shown in figure 6. This step S30 is illustrated in figure 6. Therein a second thermoplastic layer L2 is applied onto the intermediate blocking layer IBL. The application of the second thermoplastic layer L2 comprises applying a second thermoplastic filament 16b at least partly as a plurality of second path segments 18b, in particular of second loops 20b, along a second application path 22b. With regard to the application of the second thermoplastic layer L2, an analogy can be drawn to the previously described application of the first thermoplastic layer L1.

The second thermoplastic filament 16b is partially applied onto a part of the footwear upper element 10 which has been formed in the previous step S20.

By applying the second thermoplastic layer L2 onto the second specific area A2 of the shaping carrier 12, respectively of the intermediate blocking layer IBL, at least a part of a functional component 14 is formed. Herein the functional component is configured as a strap 26. The second thermoplastic layer L2 is not only applied onto the intermediate blocking layer IBL but also on an adjoining portion of the first thermoplastic layer L1. Through this "overspraying" of the first thermoplastic layer L1, a connecting portion 56 can be created that fixes the functional component 14 to the footwear upper element 10.

After the application and curing of the second thermoplastic filament 16b, the intermediate blocking layer IBL can be removed in step S50, as shown in Figure 7. Due to the presence of the intermediate blocking layer IBL during application of the second thermoplastic filament 16b, adhesion of the second thermoplastic filament 16b to the footwear upper element 10 in a region 50 where it overlaps the first thermoplastic layer L1 is prevented. In this region, the second thermoplastic filament 16b, respectively the fastening component 14, now is relatively movable to the underlying first thermoplastic layer L1. The depicted precursor product may be subjected to additional processing steps; however, it is also potentially marketable in its existing state.

Optionally a step S60 of providing at least one fastening element (not shown) and a step S70 of positioning the at least one fastening element on a first fastening portion of the first thermoplastic layer L1 or on a second fastening portion of the second thermoplastic layer L2 may be executed. Further, a step S80 of providing at least one corresponding fastening element on the first thermoplastic layer L1 or on the second thermoplastic layer L2 being opposite to the at least one fastening element 36 may be carried out. The at least one fastening element and/or the at least one corresponding fastening element may comprise a magnet, Velcro^{®} and/or a hook for example. Thereby a reusable fastening mechanism can be provided, creating a secure closure that holds the article of footwear on the foot of a user. It can be quickly opened and closed, allowing for easy adjustment and a snug fit without laces.

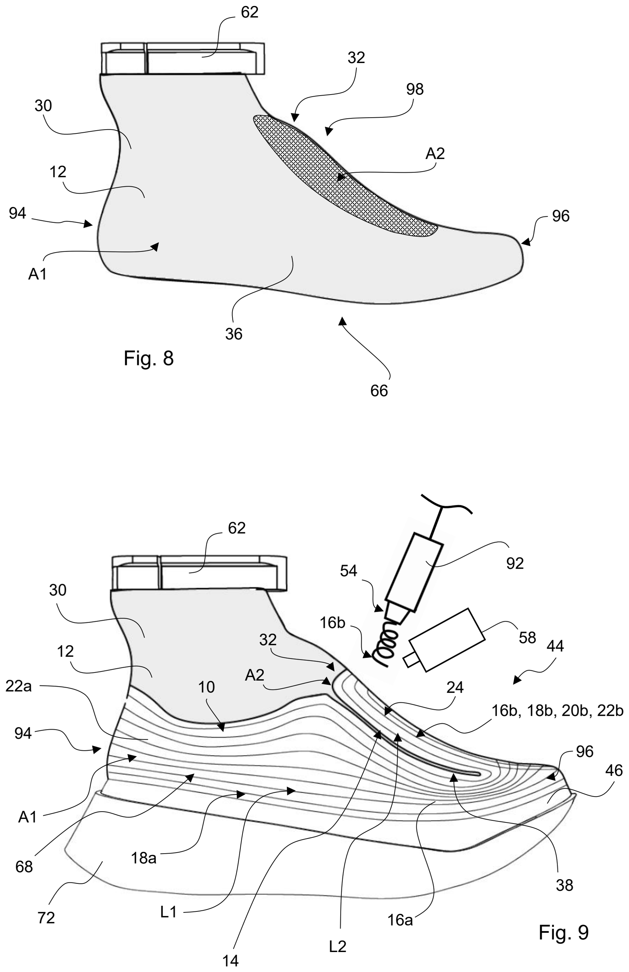

Figure 8 shows a two-dimensional schematic of a shaping carrier 12 according to a third embodiment. Like the shaping carrier 12 according a second embodiment described above with reference to figures 4 to 7 also the shape, respectively the geometry of the shaping carrier 12 shown in figure 8, deviates from the intended shape of the footwear upper element 10, particularly in at least one section of a second specific area A2. The second specific area A2 extends mainly along a portion of the shaping carrier 12 representing a back portion, respectively an instep section 32 of a foot and is highlighted by shading. In the shown embodiment this specific area A2 comprises, other than the shaping carrier shown in figures 4 to 7, a bulge exceeding from the surface of the shaping carrier 12 and thereby creating a positive mould 98. According to this embodiment the first specific area A1 and the second specific area A2 are adjacent to each other on the same level with respect to an outer surface of the shaping carrier 12.

Figure 9 shows a two-dimensional schematic of a step S20 of applying a footwear upper element 10 onto the shaping carrier 12 according to figure 8 as well as of a step S30 of applying a functional component 14 in the form of a shoe tongue 24 onto the shaping carrier 12. The second thermoplastic filament 16b of the functional component 14 is applied such that, in a first region, it transitions seamlessly into the first thermoplastic layer L1. In a second region, the thermoplastic filament 16b of the functional component is applied such a gap 38 is formed on each side of the shaping carrier 12 between the first thermoplastic layer L1 and the second thermoplastic layer12. The gap 38 extends from the first region 96 along part of the instep section to a collar.

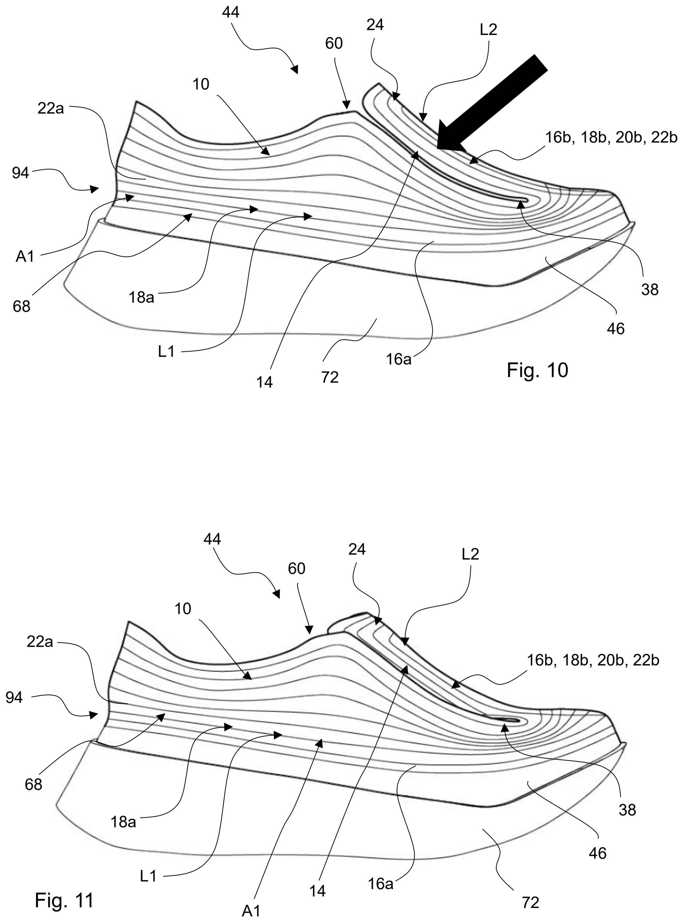

Figures 10 and 11 both shows the demoulded article of footwear 44, which was manufactured using the steps shown in Figure 9. The arrow shown in figure 10 indicates a force exerted on the shoe tongue 24. Due to the gap 38 and the shape of the shaping carrier 12 on which the article of footwear 44 was manufactured and which was oversized in a certain area, the shoe tongue 24 is now movable relative to the first thermoplastic layer L1 of the footwear upper 10.

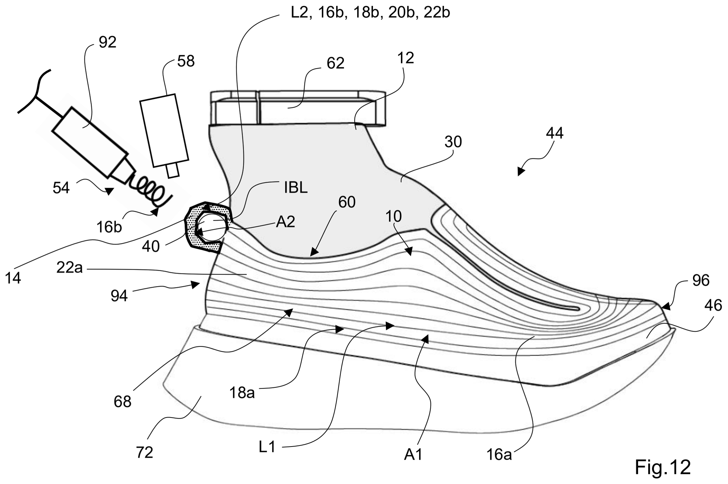

Figure 12 shows a two-dimensional schematic of a step of applying a second thermoplastic element onto a shaping carrier according to a fourth embodiment. In this embodiment the shaping carrier 12 comprises besides the footwear last 30 an intermediate blocking layer IBL in form of a cylinder 40. It should be noted that the shape of the footwear last 20 is in the shown embodiment only to be understood as an example and can also take any other conceivable shape. The cylinder 40 is positioned on a heel portion 94 of the shaping carrier 12. In particular the cylinder 40 is positioned on a part of a footwear upper element positioned in the heel portion 94 of the shaping carrier 12. By applying a second thermoplastic filament 16b onto the cylinder 40 a functional component 14 in form of a pull tab which may acts as a donning aid, levering a collar 60 of the article of footwear 44 open and guiding a foot of a user past a counter to reduce insertion force and prevent counter collapse.

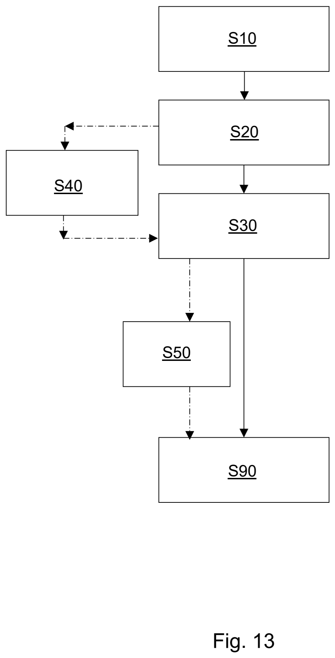

Figure 13 depicts a schematic flow diagram of a method for manufacturing different articles of footwear and in particular their footwear upper element 10, respectively at least a part of it. The method may be implemented by a manufacturing system 42 schematically shown in figure 14, which is appropriately controlled by its control unit 70 to go through the steps of the method.

In step S10 a shaping carrier 12 is provided. After step S10 is performed, it can be continued with step S20 by applying a first thermoplastic layer L1 ontoa first specific area A1 of the shaping carrier 12, thereby forming at least a part of the footwear upper element 10.

After step S20, it can either be continued with step S40 or with step S30. When continuing with step S40 the shaping carrier 12 is provided with an intermediate blocking layer IBL which forms at least a part of the second specific area A2.

After step S40 has been executed step S30 of applying a second thermoplastic layer L2 onto a second specific area A2 of the shaping carrier 12, thereby forming at least a part of a functional component 14 is carried out.

If step S40 is not performed after step S20 it can alternatively directly be continued with S30. In this scenario it is also possible that the steps S10 of applying the first thermoplastic layer L1 and the step S30 of applying the second thermoplastic layer L2 may be performed simultaneously. Furthermore, these steps can be repeated any number of times.

When coming from step S30 and step S40 has been interposed before, it is continued with step S50 of removing the intermediate blocking layer IBL after the first thermoplastic layer L1 and/or the second thermoplastic layer L2 has hardened. After step 50 was carried out it can be continued with step 90.

If execution arrives from step S30 and step S40 has not been performed it is continued directly with step S90.

In step 90 the precursor product is finalized. In step S90 a midsole may be provided. The midsole 46 may be available as a finished part, in particular supplied by a third party, and thus made available to the manufacturing system 42. Preferably however, the midsole 46 is manufactured, preferably 3D printed, by the manufacturing system 42 in step S90.

The midsole 46 may be arranged at least partially directly onto the footwear upper element. Alternatively, the midsole may be placed on the shaping carrier immediately after step S10, before steps S20 or S30 are performed.

Before further explaining step S90, it is noted that, if the article of footwear to be manufactured should include fastening elements, such as magnets, hook-and-loop fasteners e.g., VELCRO^{®}, or any other components deemed advantageous by a person skilled in the art these elements may be provided, positioned, and/or affixed, in particular within steps S60 and S70 (not shown in the flow diagram), at any time during or after any of steps S20 to S50. In particular, a corresponding fastening element may be attached in a step S80 (not shown in the flow diagram) only during or after step S30 and/or step S40.

In step 90 the precursor product may be dried and/or cured to fuse the thermoplastic filaments 16a, 16b, for example by air blowing or in a controlled atmosphere. An outsole 72 may be attached to the midsole 46 by glueing or any other applicable method. A print may be applied to the precursor product, in particular to the footwear upper element 10 and/or the outer sole 72. The precursor product may be plasma treated prior to applying the print. Furthermore, the precursor product may be dried and/or cured after printing. Finally, the precursor product may be removed from the shaping carrier 12 and packaged. All these processing steps in step S90 may be conducted by respective manufacturing units of the manufacturing system 42 (not shown). These manufacturing units may be furnished with the shaping carrier 12 and any article fixed thereon by the handling unit.

Figure 14 contains a schematic view of a part of a manufacturing system for manufacturing the articles of footwear described above.

The manufacturing system 42 shown in figure 14 comprises a plurality of different shaping carriers 12, embodied exemplary as footwear last 30, for shaping the footwear upper elements 10. The footwear lasts 30 may be available for different footwear types and/or sizes. Among this plurality is a footwear last 30 for forming the footwear upper element 10. The midsole 46 and/or the outsole 72 may be affixed to a lower side of the footwear last 30.

The manufacturing system 42 further comprises a output unit 92 to apply the footwear upper element 10, respectively the first thermoplastic layer L1 and/or the second thermoplastic layer L2, onto a designated area. In operation, the textile output unit 92 provides thermoplastic filaments, in particular the first thermoplastic filament 16a and/or the second thermoplastic filament, which for the sake of simplicity, are also summarized below under the term "thermoplastic filaments". The thermoplastic filaments 16a, 16b may be part of a continuous thermoplastic filament 16a, 16b supplied by the textile output unit 92. In other use cases different thermoplastic filaments 16a, 16b may be used.

The textile output unit 92 comprises a dosing unit 74, a melting unit 76 and a filament discharge unit 78 having a filament discharge nozzle 54.

The melting unit 76 is configured to melt a polymer composition, which is then ejected via the filament discharge nozzle 54. The melting unit 76 comprises an extruder 80 having a barrel 82 and a screw 84 which is arranged in the barrel 82. For melting the polymer composition, the melting unit comprises a material heating unit (not shown).

The filament discharge nozzle 54 is configured to dispense the molten polymer composition. The dosing unit 74 comprises a pump 86, a pump drive 88 to drive the pump 86 and a dosing head 90. The pump 86 generates pressure for dispensing the molten polymer composition as the thermoplastic filaments 16a, 16b through the filament discharge nozzle 54. The pump 86 is configured to control, in particular fine tune, the output pressure of the molten polymer composition through the filament discharge nozzle 54.

The filament discharge unit 78 comprises a plurality of gas outlet openings (not shown here), through which a flow of gas, in particular compressed air, is ejected. The flow of gas ejected by the gas outlet openings is used to influence the thermoplastic filaments 16a, 16b emerging from the filament discharge nozzle 54 to form a helical shape. The textile output unit 40 and the method of forming the helical shaped filaments 16a, 16b is disclosed in more detail in WO 2022/069583 A1.

The manufacturing system 42 comprises a handling unit 52 to control an application path 22a of the first thermoplastic filament 16a and a second application path 22b of the second thermoplastic filament 16b when applying the respective thermoplastic filament 16a, 16b onto the footwear last 30 and/or onto already existing layers of material on the footwear last 30.

The handling unit 52 is configured to generate a relative movement of the footwear last 30 relative to the filament discharge unit 78 and in particular the filament discharge nozzle 54. The handling unit 52 is connected to the footwear last 30 to create the relative movement during application of the thermoplastic filaments 16a, 16b onto the footwear last 30 and/or onto already existing layers of material on the footwear last 30. The handling unit 52 is configured to move the footwear last 30 relative to the stationary filament discharge unit 78. The handling unit 52 may also be configured to move the footwear last 30 during the manufacturing process between different manufacturing units of the manufacturing system (not shown), the textile output unit 92 being one such manufacturing unit.

The handling unit 52 is embodied as a robot, in particular with the robotic arm having six degrees of freedom. The connection between the handling unit 52 and the footwear last 30 may be detachable so that the handling unit 52 may be connected with other footwear lasts, too.

In an alternative embodiment, the handling unit 52 may be configured to move the filament discharge unit 78 relative to the stationary footwear last 30. It would also be conceivable to move both, the filament discharge unit 78 and the footwear last 30, by respective handling units 52 during processing.

The manufacturing system 42 further comprises a direct heat unit 58 for heating the midsole 46 and/or the footwear last 30 and/or the thermoplastic filaments 16a, 16b prior and/or while applying the thermoplastic filaments 16a, 16b.

The manufacturing system 42 comprises the control unit 70 which is configured to control operation of at least the handling unit 52 and the textile output unit 92, in particular the melting unit 76, including the supply of the polymer composition, the pump drive 88, and the filament discharge unit 78.

Various modifications to the embodiments described are possible and will occur to those skilled in the art without departing from the invention, which is defined by the following claims.

## Claims

1. A method for manufacturing a footwear upper element (10), comprising:
- a step (S10) of providing a shaping carrier (12);
- a step (S20) of applying a first thermoplastic layer (L1) onto a first specific area (A1) of the shaping carrier (12), thereby forming at least a part of the footwear upper element (10); and
- a step (S30) of applying a second thermoplastic layer (L2) onto a second specific area (A2) of the shaping carrier (12), thereby forming at least a part of a functional component (14), which, at least after having removed the first thermoplastic layer (L1) and the second thermoplastic layer (L2) from the shaping carrier (12), is moveable relative to the first thermoplastic layer (L1).

2. The method according to claim 1,
wherein the step (S20) of applying the first thermoplastic layer (L1) comprises applying a first thermoplastic filament (16a) at least partly as a plurality of first path segments (18a), in particular of first loops (20a), along a first application path (22a); and/or
wherein the step (S30) of applying the second thermoplastic layer (L2) comprises applying a second thermoplastic filament (16b) at least partly as a plurality of second path segments (18b), in particular of second loops (20b), along a second application path (22b).

3. The method according to claim 1 or 2, further comprising:
- a step (S40) of providing the shaping carrier (12) with an intermediate blocking layer (IBL), wherein the intermediate blocking layer (IBL) forms at least a part of the second specific area (A2).

4. The method according to claim 3, further comprising:
- a step (S50) of removing the intermediate blocking layer (IBL) after the first thermoplastic layer (L1) and/or the second thermoplastic layer (L2) has hardened.

5. The method according to any one of the preceding claims,
wherein the functional component (14) comprises a tongue (24), a strap (26), a flap, a pull tab and/or a pocket.

6. The method according to any one of the preceding claims,
wherein the shaping carrier (12) comprises a footwear last (30), wherein at least one geometry parameter of the footwear last (30) deviates from a targeted form of the footwear upper element (10), in particular in at least one section of the second specific area (A2).

7. The method according to any one of the preceding claims,
wherein the second specific area (A2) is at least partially located at an instep section (32) of the footwear last (30).

8. The method according to any one of the preceding claims,
wherein the first specific area (A1) and the second specific area (A2) at least partially overlap.

9. The method according to any one of the claims 1 to 8, wherein the first specific area (A1) and the second specific area (A2) are adjacent to each other on the same level with respect to an outer surface of the shaping carrier (12).

10. The method according to claim 2 and any one of the claims 3 to 9,
wherein the first thermoplastic filament (16a) and the second thermoplastic filament (16b) are both parts of a common thermoplastic filament, or
wherein the first thermoplastic filament (16a) differs from the second thermoplastic filament (16b).

11. The method according to any one of the preceding claims, further comprising:
- a step (S60) of providing at least one fastening element (36); and
- a step (S70) of positioning the at least one fastening element (36) on a first fastening portion (38a) of the first thermoplastic layer (L1) or on a second fastening portion (38b) of the second thermoplastic layer (L2).

12. The method according to claim 11, further comprising:
- a step (S80) of providing at least one corresponding fastening element (40) on the first thermoplastic layer (L1) or on the second thermoplastic layer (L2) being opposite to the at least one fastening element (36).

13. The method according to claim 11 or 12,
wherein the at least one fastening element (36) and/or the at least one corresponding fastening element (40) comprises a magnet (60) and/or a hook.

14. A manufacturing system (42) for manufacturing a footwear upper element (10), the manufacturing system (42) being configured for executing a method according to any one of the preceding claims.

15. An article of footwear (44), in particular a sports and/or leisure shoe, manufactured by a method according to any one of claims 1 to 13 and/or by a manufacturing system (42) according to claim 14.
